# EUROPEAN PATENT SPECIFICATION

(11) **EP 3 866 617 B1**
(45) Date of publication and mention of the grant of the patent: **20.12.2023**
(21) Application number: 19872582.2
(22) Date of filing: 08.10.2019
(51) Int. Cl.: A23N 12/08, A23B 7/02, F26B 3/04, A23L 33/105, A23L 33/00, B02C 13/288, B02C 23/24, B02C 23/26

(54) **METHOD AND DEVICE FOR DRYING PLANT MATERIAL**
VERFAHREN UND VORRICHTUNG ZUM TROCKNEN VON PFLANZENMATERIALIEN
PROCÉDÉ ET DISPOSITIF POUR SÉCHER UNE MATIÈRE VÉGÉTALE

(30) Priority: 19.10.2018 AU 2018903960
(43) Date of publication of application: 25.08.2021
(73) Proprietor: Evolution Industries IP Pty Ltd, Cairns QLD 4870 (AU)
(72) Inventor: WATKINS, Robert Ogilvie, Walkamin, Queensland 4872 (AU)
(74) Representative: Lavoix
(86) International application number: PCT/AU2019/051083
(87) International publication number: WO 2020/077392

(56) References cited:
- CN-A- 105 011 043
- CN-U- 207 653 519
- JP-A- S63 162 050
- JP-A- 2013 174 405
- RU-C1- 2 064 477
- RU-C1- 2 093 048
- RU-C1- 2 569 829
- US-A- 3 109 471
- US-A- 5 921 479
- US-A1- 2014 088 049

## Description

### TECHNICAL FIELD

The present invention relates to a device and a method of processing plant material to provide products such as food products, dietary supplements, pharmaceuticals, cosmetics and fertilizers. In particular, the invention relates to the processing of fruit and vegetable material to provide a product that can be used as a food source, dietary supplement or a pharmaceutical. Even more particularly, the invention relates to a method of drying fruit and vegetable material to provide a dried product that can be used as a food source, dietary supplement or a pharmaceutical.

### BACKGROUND ART

It is widely accepted that the prevalence of obesity in industrialised countries is increasing. There are many factors leading to the increase in obesity, however, a significant factor is lack of energy balance. Specifically, where energy intake (food and drinks) is greater than energy used (breathing, digesting, being physically active). Put simply, a combination of an abundance of high-calorie food and increasingly sedentary lifestyles is contributing to what is being called an obesity epidemic.

In an effort to reverse the trend, government health departments have been undertaking public awareness campaigns encouraging people to look at their diets and also to increase their levels of physical activity. This should have a flow-on effect of reducing the level of chronic disease and therefore reducing reliance on health services, with a concomitant reduction in economic burden.

One outcome of the public awareness campaigns is that people are taking more interest in their diet and are looking for better food choices, in terms of nutrient content. However, some people find it difficult to consume sufficient fresh fruit and vegetables to attain the required daily nutrient levels. Access to sufficient variety of fresh fruit and vegetables can also be difficult, particularly in rural and/or remote areas of many countries.

There has also been an increased interest in reducing intake of processed foods. In addition to high levels of fat and salt that can be found in some processed foods, the nutrient content of food can be reduced as a result of heat utilised in processing the food. For example, vitamin C is known to be destroyed at temperatures above 70 ºC. Another example where the nutrient content is reduced as a result of heat treatment is banana flesh.

In an effort to eat foods that have retained maximal nutritional value, adherence to a 'raw food diet' has gained popularity. A raw food diet is a diet that consists predominantly of uncooked foods, and is considered by some to be the most natural and healthy diet. Generally to be considered 'raw', foods should not be subjected to a temperature higher than about 48 ºC (about 118 ºF). Followers of a raw food diet believe that subjecting foods to temperatures higher than about 48 ºC (about 118 ºF) results in loss of nutritional value.

Methods of processing plant material to provide a dried food product are known. JP 2013 174405 relates to a pulverizing and drying apparatus which simultaneously processes raw materials such as organic and inorganic substances that contain a large amount of water. The device of this Japanese patent application is small and simple in structure. US 5,921479 relates to a process and apparatus for simultaneously grinding and drying material containing moisture cellulose ether. The process of this US patent requires dividing a gas stream into three partial gas streams. However, these methods result in a product of inconsistent quality. In addition, known methods use high temperature for an extended period of time. The use of high temperatures over an extended period of time result in products of inconsistent quality, and reduced nutritional value.

It would therefore be advantageous to have a device and method of processing plant material to produce a food product, medicinal product or dietary supplement that retains the nutrient content of the plant material. In particular, it would be advantageous to have a method of processing fruit and vegetables whereby the nutrient content of the fruit and vegetables was not destroyed. A further advantage would be to produce a food product, medicinal product or dietary supplement of consistent quality.

It would furthermore be advantageous to have a device and method of processing plant material to produce a food product, medicinal product or dietary supplement that assists in the consumption of sufficient fruit and vegetables to attain the required daily nutrient levels.

### SUMMARY OF INVENTION

The present invention is directed to a device and method of processing fruit and vegetables, which may at least partially overcome at least one of the abovementioned disadvantages or provide the consumer with a useful or commercial choice.

With the foregoing in view, the present invention in one form, resides broadly in a method of drying fruit or vegetables, such that the nutrient content of the fruit or vegetables is retained.

In an aspect, the invention provides a method of drying fruit or vegetables, the method comprising the following steps:
(i) reducing the fruit or vegetables to small particles; and
(ii) drying the small particles of fruit or vegetables,
wherein steps (i) and (ii) are undertaken at the same time and wherein steps (i) and (ii) are undertaken using the device of the present invention.

In another aspect, the invention provides a device for processing fruit or vegetables, the device comprising:
(i) a first chamber having a first ingress for air, a second ingress for the fruit or vegetables, and means for reducing the fruit or vegetables to small particles; and
(ii) a second chamber connected to the first chamber, the second chamber have an ingress to receive fruit and vegetables from the first chamber and an egress for the processed fruit or vegetables,

such that in use, fruit or vegetables is passed into the first chamber via the second ingress with concomitant passage of air into the first chamber via the first ingress with the air acting to dry the fruit or vegetables whilst the fruit or vegetables is reduced to small particles within the first chamber, and wherein the resultant dried fruit or vegetables passes from the first chamber to the second chamber for collection via the egress of the second chamber,
characterized in that
the second ingress is provided with a seal that prevents air within the first chamber exiting the first chamber via the second ingress, and/or the egress of the second chamber comprises a cyclone dryer.

The first chamber can be any suitable size or shape, however, preferably for efficiency, the first chamber is in the form of a cylindrical drum having both ends enclosed. During use, the cylindrical drum can be positioned on its side, or standing on one end.

The first ingress for air can be at any position on the first chamber. For embodiments where the first chamber is in the form of a cylindrical drum, the first ingress for air can be at either end of the cylindrical drum, or the first ingress for air can be on the side of the cylindrical drum.

To assist with efficiency of drying, preferably the first ingress for air is positioned towards the lowest region of the first chamber. Specifically, where the first chamber is a cylindrical drum positioned on its side, preferably the first ingress for air is positioned on the side of the drum that is closest to the surface on which the drum is positioned. Alternatively, where the first chamber is a cylindrical drum positioned such that the drum is standing on one end, preferably the first ingress for air is positioned on the side of the drum close to the end on which the drum is standing. Positioning the first ingress for air in these ways provides for the air to be blown upwards through the first chamber, resulting in efficient drying and circulation of material within the first chamber.

The second ingress for fruit or vegetables can be at any position on the first chamber. For embodiments where the first chamber is in the form of a cylindrical drum, the second ingress for fruit or vegetables can be at either end of the cylindrical drum, or the second ingress for fruit or vegetables can be on the side of the cylindrical drum.

To assist with efficiency of reducing the fruit or vegetables to small particles, preferably the second ingress for the fruit or vegetables is positioned towards the uppermost region of the first chamber. Specifically, where the first chamber is a cylindrical drum positioned on its side, preferably the second ingress for fruit or vegetables is positioned on the side of the drum towards its uppermost region. Alternatively, where the first chamber is a cylindrical drum positioned such that the drum is standing on one end, preferably the second ingress for fruit or vegetables is positioned on the side of the drum close to the opposite end of the drum to the end on which the drum is standing. Positioning the second ingress for fruit or vegetables in this way provides for gravity to assist with the fruit or vegetables coming into contact with the means within the first chamber for reducing the fruit or vegetables to small particles.

However, where the fruit or vegetables are particularly sticky and/or tacky, it is preferable for the fruit or vegetables to be inserted, fed, conveyed or pumped into the first chamber via the second ingress, with the second ingress positioned towards the lowest region of the first chamber. Specifically, where the first chamber is a cylindrical drum positioned on its side, preferably the second ingress for the fruit or vegetables is positioned on the side of the drum that is closest to the surface on which the drum is positioned. Alternatively, where the first chamber is a cylindrical drum positioned such that the drum is standing on one end, preferably the second ingress for the fruit or vegetables is positioned on the side of the drum close to the end on which the drum is standing. Positioning the second ingress for the fruit or vegetables in these ways provides for sticky and/or tacky material which is generally heavy and full of moisture, to be inserted at the bottom of the chamber, allowing for initial drying and breakdown of material at the bottom of the first chamber.

Particularly preferred embodiments have the first chamber as a cylindrical drum on its side, allowing for a centrifugal force with the airflow which helps trap the initial wet material before it enters the second chamber. For embodiments where the first chamber is a cylindrical drum in a vertical configuration, such that the drum is standing on one end, the material must already be quite dry when it enters the first chamber, so that it flows better within the chamber.

The means for reducing the fruit or vegetables to small particles can be any suitable means. The means for reducing the fruit or vegetables to small particles can therefore comprise at least one blade. The at least one blade can be any suitable blade, including a flat-faced blade or a serrated blade. In a preferred embodiment, the means for reducing the fruit or vegetables to small particles comprises a series of blades.

The type of blade can be varied to suit the material being processed. For example, high fibre materials require a sharp and/or heavy-duty blade to help break down the fibre and allow for consistent drying times. In contrast, low fibre materials that are softer, or more delicate, only need a blunt and/or lighter quality blade to break the material down evenly.

In certain embodiments, the means for reducing the fruit or vegetables to small particles can be a blade grinder comprising a series of blades. In alternative embodiments, the means for reducing the fruit or vegetables to small particles can be in the form of a hammer mill comprising a series of hammers, or a comminuting mill. The use of a hammer mill is particularly useful for hard products such as nut shells or husks.

It is preferable for the fruit or vegetables to be reduced to particles that are similarly sized. Specifically, if the particles are similarly sized, the drying takes place evenly. For example, if the particles are of uneven sizes, then the smaller particles will dry faster than the larger particles, leading to a variable moisture content and variable product quality in the final product.

Even more preferably, the particles are not only similarly sized, but also relatively small. Essentially, the smaller the particles, the faster they will dry, and therefore will be subjected to the drying temperature for only a short period of time. In summary, small particles dry faster than large particles, and evenly sized particles result in a product with an even moisture content, and consistent quality.

However, it is also important that the particles are not so small as to form a mash or slurry. A mash or slurry can be extremely difficult to dry due to the electrostatic nature of water.

For embodiments where the means for reducing the fruit or vegetables to small particles comprises a series of blades, it is preferable for the series of blades to be connected to a shaft that rotates about the lengthwise axis of the cylindrical drum. Rotation of the shaft and thus rotation of the series of blades enables the series of blades to act on the fruit or vegetables to reduce them to small particles, whilst also keeping the particles moving, *i.e.,* agitating the particles, and thus simultaneously allowing the air from the first ingress to dry the particles.

It is particularly important when drying fruit or vegetable matter that has a naturally sticky or tacky texture, that it be kept moving within the cylindrical drum, to avoid any build up of partially dried material on the interior surfaces of the drum. Where the material to be processed is sticky or tacky in texture, the device needs to be regulated such that the material is kept moving, rather than focussing on particle size reduction, in order to avoid build up of the material on the interior surface of the first chamber. Reducing the distance between the end of the one or more blades and the interior surface of the first chamber also assists with prevention of material build up on the interior surface of the first chamber.

Rotation of the shaft and thus rotation of the series of blades can be achieved using just the force of air flow into the first chamber. Alternatively, rotation of the shaft and thus rotation of the series of blades can be controlled by a motor. Preferably, the motor is external to the first chamber. Use of a motor to rotate the shaft allows for control and optimisation of the speed of rotation. The motor can be any suitable motor, but preferably the speed of the motor can be adjusted from 1 rpm to 10,000 rpm to allow for control and optimisation of the drying process.

In a particularly preferred embodiment, the inside surface of the first chamber has a non-stick surface to inhibit sticking of particles of fruit or vegetables that are not completely dry to the inside surface. Sticking particles of fruit or vegetables can lead to hygiene problems, therefore use of a non-stick surface on the inside of the first chamber prevents such hygiene problems. In some embodiments, the entire internal surface of the device can be coated with a non-stick surface, or be prepared with a suitable material to ensure a non-stick environment. The non-stick surface can be any suitable non-stick surface used in food technology, including polytetrafluoroethylene (PTFE), anodized aluminium, ceramic, silicon, a superhydrophobic coating, or a high-polished stainless steel smooth surface.

In further preferred embodiments, the means for reducing the fruit or vegetables to small particles can also comprise at least one scraper. In use, the at least one scraper is positioned against the inner surface of the first chamber, and dislodges any particles of fruit or vegetables that are not completely dry to assist with keeping the particles moving within the first chamber. For example, fibrous material such as kale or grass-like material requires a low level of agitation within the first chamber, and also a slow speed of rotation (motor operating at low rpm).

In an alternative embodiment, particularly for material that requires a relatively high level of agitation and a relatively fast speed of rotation (motor operating at high rpm), the means for reducing the fruit or vegetables to small particles comprises two scrapers, positioned 180 º apart.

Essentially, the action of the rotation of the blades acts as a milling device to reduce the particles to a small, even size, whilst being dried. At the same time, the scraper in combination with the non-stick interior surface of the first chamber allows for a continuous process of particle size reduction and interior surface cleaning, resulting in an efficient, even, drying process.

In certain embodiments, the interior surface of the first chamber can comprise one or more shear teeth and/or ribbed plates. Positioning these features on the interior surface of the first chamber assists with the break down of fruit or vegetables into smaller particles. In other words, the one or more shear teeth and/or ribbed plates act in combination with the blades or scrapers to break down the fruit or vegetables into smaller particles.

The use of shear teeth and/or ribbed plates is particularly advantageous for high fibre material. The shear teeth and/or ribbed plates act in combination with the at least one blade to help break down the material, and therefore the blade does not have to rotate as fast as it might have to if the shear teeth and/or ribbed plates were not present. Material that is softer and/or lighter does not necessarily require the use of shear teeth and/or ribbed plates, as one or more rotating blades is usually sufficient to break down and keep such material moving within the first chamber.

Any fruit or vegetables can be used in the method of the invention. Particularly preferred vegetables include tubers, such as potatoes or sweet potatoes, leafy vegetables, such as spinach or kale, root vegetables, such as beetroots or carrots, and other vegetables, such as broccoli, beans, or mushrooms. Particularly preferred fruits include bananas.

In some embodiments, a single variety of fruit or vegetable is used in the method. For example, the method can be used to process green banana flesh, ripe banana flesh, kale, or sweet potato. In alternative embodiments, two or more fruits or vegetables can be processed at the same time. For example, the method can be used to process a combination of sweet potato and green banana flesh.

Entry of the fruit or vegetables into the first chamber via the second ingress can be controlled using any known means that act as regulators, including rotation paddles, a screw pump, or a conveyor. In one alternative, the second ingress is provided with a seal that prevents air within the first chamber exiting the chamber via the second ingress.

The regulators can be used to regulate, and therefore control, the rate of air flow into the first chamber via the first ingress. The rate of air flow can be adjusted depending on the fruit or vegetable to be processed. High starch products, such as bananas, are generally heavier and require a higher air flow than non-starch fibre-based products such as broccoli, kale, lettuce or cabbage. For example, the rate of air flow required to process fresh kale is less that the rate of air flow required to process sweet potatoes or green banana flesh. The regulators can be used to regulate, and therefore control, the rate of air flow into the first chamber via the first chamber throughout the process to optimise drying of the fruit or vegetable.

Alternatively, or in addition to the rate of air flow being adjustable, the focus of the air flow can also be adjusted. Specifically, the air flow can be in the form of a narrow stream of air (and therefore a focussed stream), or the air flow can be in the form of a wide stream of air (and therefore a broad stream).

The regulators can comprise the use of positive pressure of air flow through the air ingress to the first chamber and/or vacuum from the egress of the second chamber to regulate, and therefore control, the rate of air flow in the device. For example, positive pressure of air flow through the air ingress to the first chamber can be used to regulate air flow in the device. Alternatively, use of a vacuum at the egress of the second chamber can be used to regulate air flow in the device. In a further alternative, a combination of positive pressure of air flow through the air ingress to the first chamber and use of a vacuum at the egress of the second chamber can be used to regulate air flow in the device. In an even further alternative, there are one or more regulators between the first and second chambers to assist with controlling movement of fruit or vegetable material, and/or air, between the first and second chambers.

The temperature of the air in the first chamber can also be adjusted. For example, in certain embodiments, it is preferred that the combined steps of reducing the fruit or vegetables to small particles and drying the small particles are undertaken at a temperature that would enable the resultant product to retain a raw food status. Typically, the product will qualify as raw food if it has not been heated to greater than about 48 ºC (about 118 ºF). Therefore, it is preferable that the combined steps of reducing the fruit or vegetables to small particles and drying the small particles are undertaken at temperatures within the range 15 ºC - 48 ºC. The combined steps of reducing the fruit or vegetables to small particles and drying the small particles can therefore be undertaken at 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47 or 48 ºC.

Preferably, the combined steps of reducing the fruit or vegetables to small particles and drying the small particles are undertaken at a temperature less than about 30 ºC. In particularly preferred embodiments for retaining raw food status of the product, the combined steps of reducing the fruit or vegetables to small particles and drying the small particles are undertaken at a temperature selected from 21 ºC or 22 ºC.

Alternatively, where the resultant product is not required to have raw food status, the temperature of the air in the first chamber can be higher than 48 ºC. That is, where the resultant product is not required to have raw food status, the temperature of the air in the first chamber can be any temperature up to about 120 ºC. For some applications, the temperature of the air in the first chamber can be as high as about 300 ºC. The temperature in the second chamber can be significantly lower than the temperature in the first chamber. For example, bananas can be dried to a powder using a temperature within the range 80 °C to 90 ºC within the second chamber. For some applications, the temperature of the air in the second chamber can be within the range 150 °C to 160 ºC.

Applications that might require a high air temperature in the first chamber of about 300 ºC, and an air temperature in the second chamber within the range 150 ºC to 160 ºC, are those where a "kill step" is required, for example, to destroy germs or bacteria. A very short burst of high temperature air, in the form of flash drying, can be useful in preparing nutraceuticals.

As would be expected, the higher the temperature, the faster the particles will dry. However, it is important to find a balance between temperature, speed of drying, and not destroying the nutrient content of the fruit or vegetable matter.

The air can be heated by any suitable means prior to passing through the first egress into the first chamber. For example, the air can be electrically heated, gas heated or green energy heated.

Optionally, the humidity of the air passing into the first ingress can be controlled. Use of low humidity air, for example, very low humidity air having a humidity of 1-10 %, has a very fast drying ability. Alternatively, freeze drying air and then using the freeze-dried air results in very fast drying of the fruit or vegetable material. Essentially, removing as much moisture from the air (i.e. reducing the humidity of the air) and using this air in the process of the invention, provides for faster removal of moisture from the fruit or vegetable matter, than if high humidity or moist air is used. Advantageously, the use of low humidity air or freeze-dried air, allows the fruit or vegetable matter to be dried fast, without requiring high temperatures. In certain embodiments, the humidity of the air is so low, such that the material is essentially freeze dried within the first chamber.

In summary, the air entering the first ingress of the first chamber can be a modified atmosphere, in that it can be hot, warm, cold, dry, or humid air.

Optionally, the fruit or vegetables can be pre-treated before being added to the first chamber for processing according to the method of the invention. For example, potatoes can be pre-treated to remove any soil remaining on their surface, such that the pre-treatment is essentially a cleaning step. Cleaning of the fruit or vegetables can be undertaken using known methods in the art.

For example, the cleaning can simply comprise passage of the fruit or vegetables through a trough containing a fluid suitable for cleaning any extraneous material, such as soil or bugs, from the exterior of the fruit or vegetables. Alternatively, the cleaning can comprise use of a spray nozzle system to spray a suitable cleaning fluid onto the exterior of the fruit or vegetables to remove any extraneous material, such as soil or bugs.

The fluid can be any suitable solution for cleaning the fruit or vegetables and can simply be water (including hot water or steam). Alternatively, the fluid can be any suitable sanitation solution such as those known in the fruit and vegetable processing industry. For example, the sanitation solution can be hydrogenised (either acid or alkaline) water, a mild solution of chlorine, or a weak solution of hypochlorite. Preferably, the mild solution of chlorine is an aqueous solution comprising chlorine within the range 100 - 1500 ppm. The mild solution of chlorine can therefore comprise 100, 200, 300, 400, 500, 600, 700, 800, 900, 1000, 1100, 1200, 1300, 1400 or 1500 ppm chlorine. Where the sanitation solution is a weak solution of hypochlorite, preferably this is an aqueous solution comprising hypochlorite within the range 100 - 1500 ppm. The aqueous solution can therefore comprise 100, 200, 300, 400, 500, 600, 700, 800, 900, 1000, 1100, 1200, 1300, 1400 or 1500 ppm hypochlorite.

When the fluid is other than water, the fruit or vegetables can be subjected to a rinsing step after the washing step to remove traces of the washing fluid from the fruit or vegetables. The rinsing step simply consists of rinsing the fruit or vegetables with water. The rinsing can be achieved using any suitable means. Typically, the rinsing is achieved by spraying water on the fruit or vegetables, or by passing the fruit or vegetables through a rinsing trough containing water.

In a particularly preferred embodiment, the fruit or vegetables can be prepared as a slurry or mash before being transferred to the first chamber via the second ingress. Use of a slurry or mash results in a shorter processing and drying period in the first chamber.

Alternatively, fruit or vegetables to be dried can be prepared as coarse particles or fine particles before being transferred to the first chamber via the second ingress. For example, spinach or lettuce can be prepared by coarsely chopping and then transferred to the first chamber via the second ingress. As spinach and lettuce both have a high fibre and high water content, the temperature in the first chamber can be low to preserve the nutrients and colour. The material is slowly broken down by the one or more blades in the first chamber as it dries, before exiting the first chamber.

As another example, sweet potato is a high fibre, high sugar, starch-based product. Sweet potato can be placed in the first chamber as a fine particle at a low temperature, but with the one or more blades rotating faster, so that the sweet potato breaks down quicker and dries faster.

Optionally, a pre-processing step, whereby bulk water, fluid or moisture is removed from the fruit or vegetable matter, can be undertaken. Bulk water, fluid or moisture can be removed from the fruit or vegetable matter in its native state, or bulk water, fluid or moisture can be removed from a slurry or mash of the fruit or vegetables. The pre-processing step can take the form of pressing to remove bulk water, fluid or moisture. Such a pre-processing step speeds up the drying process, and can result in a more efficient process, dependent on the fruit or vegetable to be dried.

The second chamber is essentially a chamber for receiving the dried material and exhaust air from the first chamber and thus can be any suitable size or shape. Preferably, the positive pressure of air in the first chamber as a result of air flow into the first ingress of the first chamber, acts on dried material in that chamber and enables the dried material to pass from the first chamber into the second chamber. It is therefore preferable that the ingress for the second chamber is in air communication with the uppermost region of the first chamber. Specifically, where the first chamber is a cylindrical drum positioned on its side, preferably the ingress for the second chamber is adjacent to the uppermost region of the drum. Alternatively, where the first chamber is a cylindrical drum positioned such that the drum is standing on one end, preferably the ingress for the second chamber is adjacent to the side of the drum close to the opposite end of the drum to the end on which the drum is standing. Positioning the ingress for the second chamber in these ways provides for the air to be blown upwards from the first chamber, resulting in efficient transfer of dried material from the first chamber to the second chamber.

Preferably the air temperature in the second chamber is lower than the air temperature of the first chamber. Essentially, the second chamber provides a final drying period to remove a small amount of remaining moisture and so the temperature does not need to be as high as in the first chamber where a large amount of moisture is required to be removed from the fruit or vegetables.

Once the fruit or vegetables in the second chamber have reached the desired level of dryness, increased positive pressure of air can be used to transfer the dried material through the egress of the second chamber for collection.

Optionally, the residence time of the fruit or vegetables in the second chamber is controlled by one or more regulators, such as control flaps at the ingress and egress, in combination with the air flow. Specifically, air flow through the second chamber can be decreased to increase the residence time of the fruit or vegetables in the second chamber, or air flow through the second chamber can be increased to decrease the residence time of the fruit or vegetables in the second chamber. The actual residence time will be dictated by the material being dried, and the rate of drying required.

Preferably, the regulators can be adjusted throughout the process to regulate, and therefore control, the rate of air flow, and therefore product flow, from the first chamber into the second chamber, and also from the second chamber through the egress to exit the second chamber, thereby regulating the residence time of the fruit or vegetable in the second chamber in order to optimise drying of the fruit or vegetable.

In another alternative, the egress from the second chamber can incorporate a cyclone dryer to remove any steam moisture from exiting particles of product. Essentially, towards the egress from the second chamber, there is a combination of hot and steamy air together with particles of dried material. The cyclone drier assists with separation of the steam and particles, leading to drier particles. That is, the action of the cyclone dryer cools and dries the particles. In certain embodiments, the egress from the second chamber can comprise filtration screens to separate the fine, dry particles of material.

In certain embodiments, the height of the second chamber can be adjusted to provide for different dwell times (the amount of time a material is resident in the second chamber). For example, where a material is to be dried with a high moisture level, using a short second chamber allows for a faster dwell time. Conversely, if a material is to be dried to a very low moisture level, then a taller second chamber allows for a longer dwell time, and therefore a drier product.

The present invention thus provides a method of processing plant material, such as fruit or vegetables, whereby the plant material is efficiently reduced to small particles and dried in a single step. The method of the present invention is particularly useful for fast and efficient drying of fruit or vegetables that have proven difficult to dry by currently known methods.

The present invention also enables the processing of the plant material to be undertaken at any suitable temperature such as temperatures no greater than 48 ºC where the product is to retain raw food status, or greater than 48 ºC up to about 120 ºC, where raw food status is not required, and up to about 300 ºC for applicants that require a "kill step", such as to destroy bacteria. The temperature within each chamber can be different, dependent on the fruit or vegetable being processed. For example, the temperature in the first chamber can be higher than the temperature in the second chamber. The temperature in each chamber can be optimised for each fruit or vegetable.

Optionally, the invention provides for the operation of multiple devices in tandem. For example, a first device could take material with > 90% moisture and reduce it to about 40% moisture. The material could then be passed through a second device that reduces the moisture content from 40% down to 5%. Using a single device to take materials from > 90% moisture down to 5%, could be quite harsh on the nutrients in the material, and therefore reduce the value of the final dried product. Operating devices in tandem allows for protection of nutrients within the material, due to temperature adjustment to suit the drying stage of the material.

In summary, devices and methods according to the present invention provide for flexibility in drying an enormous variety of food products (fruits and vegetables). Each of air flow, blade speed, and temperature can be varied dependent on the material to be dried. For example, materials that are heat sensitive can be dried at a low temperature, but with high air flow and/or blade speed to ensure efficient drying. Conversely, for materials that are not heat sensitive, a higher temperature could be used in combination with a suitable air flow and blade speed to ensure efficient drying.

Devices and methods according to the present invention provide a continuous process, whereby once material in the first chamber has been reduced in size and dried sufficiently, air flow within the first chamber enables the material to be moved upwards, against gravity to enter the second chamber, whilst additional moist material can enter the first chamber to continue the process.

A diverse spectrum of products can be dried in devices of the invention, from high fibre plant-based material through to soft and starchy materials. The methods can be adapted to adjust speed of drying and wind flow, such that high moisture products that have previously been difficult and expensive to dry, are economically feasible to dry using devices and methods of the present invention.

The processed plant material can be used to provide a dried product that can be used as a food source, dietary supplement or a pharmaceutical. The process of the present invention contrasts to current drying methods, such as drum trammel dryers, where the product can be subjected to temperatures within the range 200 - 300 ºC for extended periods of time. Current drying methods also result in inconsistent product quality.

Advantageously, devices and methods of the present invention can be used to pasteurize a final product. For example, a material in a powder form can be placed in the first chamber of a device, and subjected to a flash-dry, which pasteurizes the product quickly and effectively, without damaging the nutrient value of the material. The material only remains in the first chamber for a matter of seconds during the flash-dry, rather than for minutes, and therefore the nutrient value is retained, whilst any water that could potentially damage plant phytochemicals and nutrients at high temperatures, is quickly removed. In summary, faster processing requires less heat and therefore minimises oxidation of nutrients.

### BRIEF DESCRIPTION OF DRAWINGS

Various embodiments of the invention will be described with reference to the following drawings, in which:
Figure 1 is a side view schematic of a device according to an embodiment of the invention.
Figure 2 is a perspective view schematic of the device shown in Figure 1.
Figure 3 is a perspective view schematic of agitation blades in combination with a scraper bar according to an embodiment of the invention.
Figure 4 is a side view schematic of a device according to an alternative embodiment of the invention.

### DESCRIPTION OF EMBODIMENTS

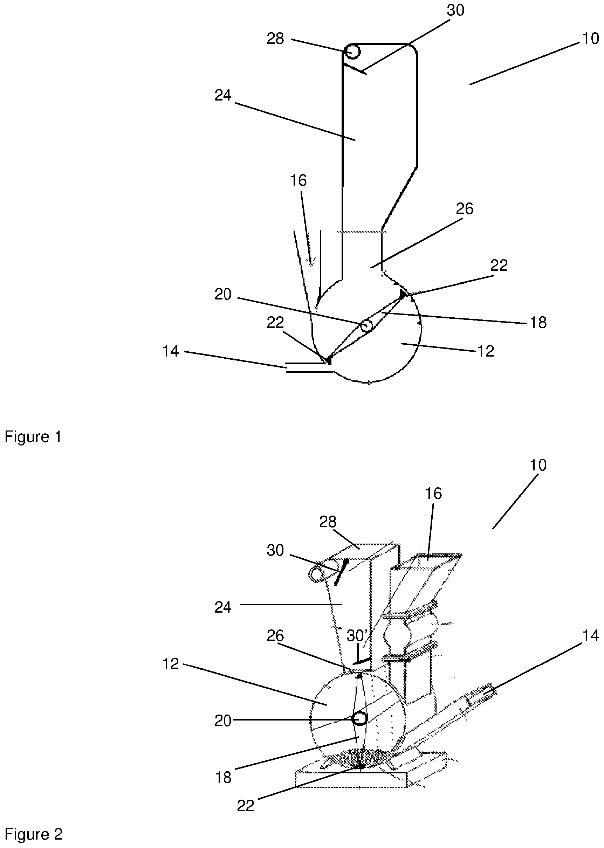

Referring to Figure 1, there is shown a side view schematic of a device 10 according to an embodiment of the invention. The device 10 comprises a first chamber 12, the first chamber 12 having a first ingress 14 for air and a second ingress 16 for fruit or vegetables. The device 10 further comprises a series of blades 18 attached to a central shaft 20. The tips of the blades 18 comprise a scraper bar 22.

The blades 18 can rotate in a clockwise manner, or the blades 18 can rotate in an anticlockwise manner. In particular embodiments, it can be desirable for the blades 18 to rotate in a clockwise manner for a period of time, and then change to rotate in an anticlockwise manner for a period of time. Changing the rotation of the blades 18 in this way can provide further agitation to assist with drying of the fruit or vegetables in the first chamber 12.

The device 10 further comprises a second chamber 24. The second chamber 24 has an ingress 26 for receiving fruit and vegetables from the first chamber 12 and an egress 28 for the processed fruit or vegetables. The second chamber 24 additionally has a control flap 30 which is used to control exit of dried material from the second chamber 24. The control flap 30 can be regulated to adjust the residence time of the fruit or vegetables in the second chamber.

Additionally, the device 10 can comprise further control flaps (shown as 30' in figure 2) that can be regulated to adjust the residence time of the fruit or vegetables in the first chamber, and/or to control entry of fruit or vegetables from the first chamber 12, into the second chamber 24. The residence time of the fruit or vegetables in each chamber can thus be adjusted to ensure the resultant product is dry by the time it exits the second chamber 24.

A perspective view schematic of the device of Figure 1 is shown in Figure 2, with like features numbered similarly.

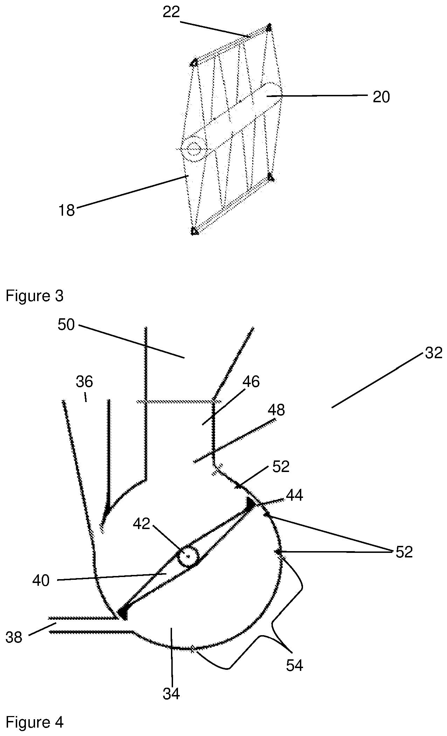

A perspective view schematic of agitation blades 18 in combination with a scraper bar 22 according to an embodiment of the invention is shown in Figure 3. The agitation blades 18 are connected to a central shaft 20. The tips of the agitation blades 18 are adapted with a scraper bar 22. In use, the scraper bars 22 are positioned on the inside surface of the first chamber 12 and as the central shaft 20 rotates (whether due to the action of the air flow, or under the control of a motor), the agitation blades 18 act to reduce the size of the fruit or vegetables particles and the scraper bars 22 prevent fruit or vegetable matter from building up on the inside surface of the first chamber 12.

Referring to Figure 4, there is shown a side view schematic of a device 32 according to an embodiment of the invention. The device 32 comprises a first chamber 34, the first chamber 34 having a first ingress 36 for air and a second ingress 38 for fruit or vegetables. In this embodiment, the fruit and vegetables enter the first chamber 34 via the second ingress 38 which is positioned towards the bottom of the first chamber 34. The first ingress 36 for air is positioned towards the top of the first chamber 34. This embodiment is particularly useful for fruit or vegetable material that is heavy and has a high moisture content.

The device 32 further comprises a series of blades 40 attached to a central shaft 42. The tips of the blades 40 comprise a scraper bar 44.

The blades 40 can rotate in a clockwise manner, or in an anticlockwise manner. In particular embodiments, it can be desirable for the blades 40 to rotate in a clockwise manner for a period of time, and then change to rotate in an anticlockwise manner for a period of time. Changing the rotation of the blades 40 in this way can provide further agitation to assist with drying of the fruit or vegetables in the first chamber 34.

The device 32 further comprises a second chamber 46. The second chamber 46 has an ingress 48 for receiving fruit and vegetables from the first chamber 34 and an egress 50 for the processed fruit or vegetables.

The first chamber 34 has shear teeth 52 which assist with the break down of fruit or vegetables into smaller particles by acting in combination with the blades 40 break down the fruit or vegetables into smaller particles.

Additional shear teeth 52 can be positioned in the lower portion of the first chamber 34, as indicated by 54. Positioning additional shear teeth 52 in region 54 is particularly useful for product that is particularly difficult to dry and control, such as high fibre material.

## Claims

1. A device (10, 32) for processing fruit or vegetables, the device (10, 32) comprising:
(i) a first chamber (12, 34) having a first ingress (14, 36) for air, a second ingress (16, 38) for the fruit or vegetables, and means for reducing the fruit or vegetables to small particles; and
(ii) a second chamber (24, 46) connected to the first chamber (12, 34), the second chamber (24, 46) have an ingress (26, 48) to receive fruit and vegetables from the first chamber (12, 34) and an egress (28, 50) for the processed fruit or vegetables,
such that in use, fruit or vegetables is passed into the first chamber (12, 34) via the second ingress (16, 38) with concomitant passage of air into the first chamber (12, 34) via the first ingress (14, 36) with the air acting to dry the fruit or vegetables whilst the fruit or vegetables is reduced to small particles within the first chamber(12, 34), and
wherein the resultant dried fruit or vegetables passes from the first chamber (12, 34) to the second chamber (24, 46) for collection via the egress (28, 50) of the second chamber (24, 46),
**characterized in that**
the second ingress (16, 38) is provided with a seal that prevents air within the first chamber (12, 34) exiting the first chamber (12, 34) via the second ingress (16, 38), and/or the egress (28, 50) of the second chamber (24, 46) comprises a cyclone dryer.

2. The device (10, 32) of claim 1, wherein the first chamber (12, 34) is in the form of a cylindrical drum.

3. The device (10, 32) of claim 1 or claim 2, wherein the first ingress (14, 36) for air is positioned towards the lowest region of the first chamber (12, 34).

4. The device (10, 32) of any one of claims 1 to 3, wherein the second ingress (16, 38) for fruit or vegetables is positioned towards the uppermost region of the first chamber (12, 34).

5. The device (10, 32) of claim 1 or claim 2, wherein the first ingress (14, 36) for air is positioned towards the uppermost region of the first chamber (12, 34).

6. The device (10, 32) of claim 5, wherein the second ingress (16, 38) for fruit or vegetables is positioned towards the lowest region of the first chamber (12, 34).

7. The device (10, 32) of any one of claims 1 to 6, wherein the means for reducing the fruit or vegetables to small particles comprises a hammer mill, or wherein the means for reducing the fruit or vegetables to small particles comprises at least one blade (18, 40), preferably wherein the means for reducing the fruit or vegetables to small particles comprises a series of blades (18, 40).

8. The device (10, 32) of claim 7, wherein the series of blades (18, 40) is connected to a rotating shaft (20, 42).

9. The device (10, 32) of claim 8, wherein rotation of the shaft (20, 42) is controlled by air flow into the first chamber (12, 34), or rotation of the shaft (20, 42) is controlled by a motor.

10. The device (10, 32) of any one of claims 1 to 9, wherein the first chamber (12, 34) has an interior surface that is non-stick.

11. The device (10, 32) of any one of claims 1 to 7, wherein the means for reducing the fruit or vegetables to small particles comprises at least one scraper (22, 44), preferably wherein the means for reducing the fruit or vegetables to small particles comprises two scrapers (22, 44), positioned 180° apart.

12. The device (32) of any one of claims 1 to 11, wherein first chamber (12, 34) has an interior surface comprising one or more shear teeth (52) and/or ribbed plates.

13. A method of drying fruit or vegetables, the method comprising the following steps:
(i) reducing the fruit or vegetables to small particles; and
(ii) drying the small particles of fruit or vegetables,
wherein steps (i) and (ii) are undertaken at the same time, and wherein steps (i) and
(ii) are undertaken using the device (10, 32) of any one of claims 1 to 12.

## Patentansprüche

1. Vorrichtung (10, 32) zum Verarbeiten von Obst oder Gemüse, wobei die Vorrichtung (10, 32) Folgendes umfasst:
(i) eine erste Kammer (12, 34) mit einem ersten Einlass (14, 36) für Luft, einem zweiten Einlass (16, 38) für das Obst oder Gemüse und Mitteln zum Zerkleinern des Obstes oder Gemüses zu kleinen Teilchen; und
(ii) eine zweite Kammer (24, 46), die mit der ersten Kammer (12, 34) verbunden ist, wobei die zweite Kammer (24, 46) einen Einlass (26, 48) zur Aufnahme von Obst und Gemüse aus der ersten Kammer (12, 34) und einen Auslass (28, 50) für das verarbeitete Obst oder Gemüse aufweist,
sodass bei der Verwendung Obst oder Gemüse über den zweiten Einlass (16, 38) in die erste Kammer (12, 34) und gleichzeitig Luft über den ersten Einlass (14, 36) in die erste Kammer (12, 34) geleitet wird, wobei die Luft zum Trocknen des Obstes oder Gemüses dient, während das Obst oder Gemüse in der ersten Kammer (12, 34) zu kleinen Teilchen zerkleinert wird, und
wobei das entstandene getrocknete Obst oder Gemüse von der ersten Kammer (12, 34) über den Auslass (28, 50) der zweiten Kammer (24, 46) in die zweite Kammer (24, 46) zum Sammeln gelangt, **dadurch gekennzeichnet, dass**
der zweite Einlass (16, 38) mit einer Dichtung versehen ist, die verhindert, dass Luft innerhalb der ersten Kammer (12, 34) die erste Kammer (12, 34) über den zweiten Einlass (16, 38) verlässt, und/oder der Auslass (28, 50) der zweiten Kammer (24, 46) einen Zyklontrockner umfasst.

2. Vorrichtung (10, 32) nach Anspruch 1, wobei die erste Kammer (12, 34) die Form einer zylindrischen Trommel hat.

3. Vorrichtung (10, 32) nach Anspruch 1 oder Anspruch 2, wobei der erste Einlass (14, 36) für Luft in Richtung des untersten Bereichs der ersten Kammer (12, 34) angeordnet ist.

4. Vorrichtung (10, 32) nach einem der Ansprüche 1 bis 3, wobei der zweite Einlass (16, 38) für Obst oder Gemüse in Richtung des obersten Bereichs der ersten Kammer (12, 34) angeordnet ist.

5. Vorrichtung (10, 32) nach Anspruch 1 oder Anspruch 2, wobei der erste Einlass (14, 36) für Luft in Richtung des obersten Bereichs der ersten Kammer (12, 34) angeordnet ist.

6. Vorrichtung (10, 32) nach Anspruch 5, wobei der zweite Einlass (16, 38) für Obst oder Gemüse in Richtung des untersten Bereichs der ersten Kammer (12, 34) angeordnet ist.

7. Vorrichtung (10, 32) nach einem der Ansprüche 1 bis 6, wobei das Mittel zum Zerkleinern des Obstes oder Gemüses eine Hammermühle umfasst oder wobei das Mittel zum Zerkleinern des Obstes oder Gemüses mindestens eine Klinge (18, 40) umfasst, vorzugsweise wobei das Mittel zum Zerkleinern des Obstes oder Gemüses eine Reihe von Klingen (18, 40) umfasst.

8. Vorrichtung (10, 32) nach Anspruch 7, wobei die Reihe von Klingen (18, 40) mit einer rotierenden Welle (20, 42) verbunden ist.

9. Vorrichtung (10, 32) nach Anspruch 8, wobei die Rotation der Welle (20, 42) durch einen Luftstrom in die erste Kammer (12, 34) gesteuert wird oder die Rotation der Welle (20, 42) durch einen Motor gesteuert wird.

10. Vorrichtung (10, 32) nach einem der Ansprüche 1 bis 9, wobei die erste Kammer (12, 34) eine innere Oberfläche aufweist, die nicht haftend ist.

11. Vorrichtung (10, 32) nach einem der Ansprüche 1 bis 7, wobei das Mittel zum Zerkleinern des Obstes oder Gemüses mindestens einen Abstreifer (22, 44) umfasst, vorzugsweise wobei das Mittel zum Zerkleinern des Obstes oder Gemüses zwei Abstreifer (22, 44) umfasst, die um 180° versetzt angeordnet sind.

12. Vorrichtung (32) nach einem der Ansprüche 1 bis 11, wobei die erste Kammer (12, 34) eine Innenfläche mit einem oder mehreren Scherzähnen (52) und/oder Rippenplatten aufweist.

13. Verfahren zum Trocknen von Obst oder Gemüse, wobei das Verfahren die folgenden Schritte umfasst:
(i) Zerkleinern des Obstes oder Gemüses in kleine Teilchen; und
(ii) Trocknen der kleinen Teilchen von Obst oder Gemüse,
wobei die Schritte (i) und (ii) zur gleichen Zeit durchgeführt werden und wobei die Schritte (i) und (ii) unter Verwendung der Vorrichtung (10, 32) nach einem der Ansprüche 1 bis 12 durchgeführt werden.

## Revendications

1. Dispositif (10, 32) pour le traitement de fruits ou de légumes, le dispositif (10, 32) comprenant :
(i) une première chambre (12, 34) comportant une première entrée (14, 36) pour l'air, une seconde entrée (16, 38) pour les fruits ou les légumes, et des moyens pour réduire les fruits ou les légumes en petites particules ; et
(ii) une seconde chambre (24, 46) reliée à la première chambre (12, 34), la seconde chambre (24, 46) comportant une entrée (26, 48) pour recevoir les fruits et légumes de la première chambre (12, 34) et une sortie (28, 50) pour les fruits ou légumes traités,
de telle sorte qu'en cours d'utilisation, les fruits ou les légumes sont introduits dans la première chambre (12, 34) par la deuxième entrée (16, 38) et que de l'air pénètre simultanément dans la première chambre (12, 34) par la première entrée (14, 36), l'air agissant pour sécher les fruits ou les légumes tandis que les fruits ou les légumes sont réduits en petites particules à l'intérieur de la première chambre (12, 34), et
dans lequel les fruits ou légumes séchés qui en résultent passent de la première chambre (12, 34) à la seconde chambre (24, 46) pour être collectés par la sortie (28, 50) de la seconde chambre (24, 46), **caractérisé par le fait que**
la seconde entrée (16, 38) est munie d'un joint qui empêche l'air à l'intérieur de la première chambre (12, 34) de sortir de la première chambre (12, 34) par la seconde entrée (16, 38), et/ou la sortie (28, 50) de la seconde chambre (24, 46) comprend un séchoir à cyclone.

2. Dispositif (10, 32) selon la revendication 1, dans lequel la première chambre (12, 34) se présente sous la forme d'un tambour cylindrique.

3. Dispositif (10, 32) selon la revendication 1 ou la revendication 2, dans lequel la première entrée (14, 36) pour l'air est positionnée vers la région la plus basse de la première chambre (12, 34).

4. Dispositif (10, 32) selon l'une quelconque des revendications 1 à 3, dans lequel la seconde entrée (16, 38) pour les fruits ou les légumes est positionnée vers la région la plus haute de la première chambre (12, 34).

5. Dispositif (10, 32) selon la revendication 1 ou la revendication 2, dans lequel la première entrée (14, 36) pour l'air est positionnée vers la région la plus haute de la première chambre (12, 34).

6. Dispositif (10, 32) selon la revendication 5, dans lequel la seconde entrée (16, 38) pour les fruits ou les légumes est positionnée vers la région la plus basse de la première chambre (12, 34).

7. Dispositif (10, 32) selon l'une quelconque des revendications 1 à 6, dans lequel le moyen de réduire les fruits ou les légumes en petites particules comprend un broyeur à marteaux, ou dans lequel le moyen de réduire les fruits ou les légumes en petites particules comprend au moins une lame (18, 40), de préférence dans lequel le moyen de réduire les fruits ou les légumes en petites particules comprend une série de lames (18,40).

8. Dispositif (10, 32) selon la revendication 7, dans lequel la série de lames (18, 40) est reliée à un arbre rotatif (20, 42).

9. Dispositif (10, 32) selon la revendication 8, dans lequel la rotation de l'arbre (20, 42) est contrôlée par le flux d'air dans la première chambre (12, 34), ou la rotation de l'arbre (20, 42) est contrôlée par un moteur.

10. Dispositif (10, 32) selon l'une quelconque des revendications 1 à 9, dans lequel la première chambre (12, 34) présente une surface intérieure antiadhésive.

11. Dispositif (10, 32) selon l'une quelconque des revendications 1 à 7, dans lequel le moyen de réduire les fruits ou les légumes en petites particules comprend au moins un racleur (22, 44), de préférence dans lequel le moyen de réduire les fruits ou les légumes en petites particules comprend deux racleurs (22, 44), positionnés à 180º l'un de l'autre.

12. Dispositif (32) selon l'une quelconque des revendications 1 à 11, dans lequel la première chambre (12, 34) présente une surface intérieure comprenant une ou plusieurs dents de cisaillement (52) et/ou des plaques nervurées.

13. Procédé de séchage de fruits ou de légumes, le procédé comprenant les étapes suivantes :
(i) la réduction des fruits ou des légumes en petites particules ; et
(ii) le séchage des petites particules de fruits ou de légumes,
dans lequel les étapes (i) et (ii) sont effectuées en même temps, et dans lequel les étapes (i) et (ii) sont effectuées à l'aide du dispositif (10, 32) selon l'une quelconque des revendications 1 à 12.
